# EUROPÄISCHE PATENTANMELDUNG

(11) **EP 0 946 029 A1**
(43) Veröffentlichungstag der Anmeldung: **29.09.1999**
(21) Anmeldenummer: 99810256.0
(22) Anmeldetag: 22.03.1999
(51) Int. Cl.: H04M 1/18

(54) **Telefonkabine**

(30) Priorität: 23.03.1998 CH 68398
(71) Anmelder: Company for Technology Transfer and Patents Sark-Kistner, 1736 St. Silvester (CH)
(72) Erfinder: Sark, Werner, 1736 St. Silvester (CH)

(57) **Zusammenfassung**

In der Telefonkabine sind die technischen Einrichtungen in oder hinter einer Wand Ⓦ aus bruchsicherem Glas vor Vandalen geschützt untergebracht.

## Beschreibung

Die vorliegende Erfindung betrifft eine Telefonkabine.
Eine Telefonkabine besteht aus der Kabine, mit dem Telefonapparat, den Telefonbüchern mit Halterung, einer Bedienungsanleitung, einer eventuellen Ablage, usw.
Der Telefonapparat besteht aus einem Kasten mit den Wählknöpfen, einer Geldeinwurf und Rückgabevorrichtung, einem Karteneinzug für Kreditkarten, Telefonkarten usw. mit Lesevorrichtung, einer Anzeigevorrichtung und dem Telefonhörer mit Aufhängevorrichtung. Die mechanischen Teile wie Wählknöpfe, Telefongabel und Telefonhörer mit Kabel können durch Vandalismus leicht zerstört werden. Dies trifft ebenfalls auf den Telefonkasten, die Telefonbücher mit Halterung, der Betriebsanleitung, einer eventuellen Ablage, usw., zu.

Zweck dieser Erfindung ist es, die technischen Einrichtungen einer Telefonkabine weitgehend vandalensicher auszuführen und den Vandalen keine Angriffsflächen, wie Telefonkasten mit Hörer und Tastatur, Telefonbücher mit Halterung, usw., mehr zu bieten. Durch diese Erfindung wird erreicht, die Vandalismusschäden in Telefonkabinen zu verhindern bzw. zu reduzieren.
Alle technischen Einrichtungen befinden sich geschützt hinter einer vandalensicherer Wand (Fläche) z.B. Metallwand, bruchsicherer Glaswand, usw. Diese Wand kann eine oder mehrere Seiten der Telefonkabine bedecken. Diese Flächen können unterteilt und geneigt angeordnet aber auch gebogen sein. In oder hinter dieser Fläche befinden sich geschützt die Taster, Sensoren, Monitore für optischen Anzeigen, eine Freisprecheinrichtung, ein Karteneinzug, usw.. Die Telefonbücher werden durch Bildschirme (elektronisches Telefonbuch) ersetzt.
Betritt man eine Telefonkabine sieht man nur noch eine Wand, z.B.: bruchsichere Glaswand mit den dahinter geschützt angebrachten, erforderlichen technischen Einrichtungen wie:
- Tastenfeld ①, mit den Zahlen und Buchstaben zum Wählen der Telefonnummer bzw. Steuerung des Bildschirmes für das elektronische Telefonbuch,(zur Suche einer Telefonnummer), die dann durch einen Befehl sofort vom System gewählt werden kann. (muss nicht mehr selber gewählt werden). Taster können als berührungslose Taster (Sensoren) oder touch screens, touch panels, usw. ausgebildet werden, mit der notwendigen Auswertelektronik und Steuerung.
   Die visuelle Darstellung der Tastfelder kann an der Glasoberfläche angebracht oder in Taschen in bzw. hinter der Glaswand durch Folien sichtbar gemacht werden. Diese Folien sind leicht austauschbar und können induviduell gestaltet werden.
- Monitor ②, über diesen Bildschirm können alle notwendigen bzw. gewünschten Anzeigen sichtbar gemacht werden, wie Gesprächszeit, Münzvorrat, Uhrzeit, usw. Es können auch die Informationen der Dienstleistungsnummer wie 111, 161, 163 usw. optisch sichtbar gemacht werden. Für ein Bildtelefon kann dieser Monitor ebenfalls verwendet werden. Die dazu notwendige Video-Kamera kann auch für Ueberwachungsaufgaben herangezogen werden. Video überwachte Einrichtungen werden seltener beschädigt.
- Vorrichtung ④ für die Bezahlung durch Telefonkarten, Kreditkarten usw. mit den erforderlichen Anzeigen. Es kann ebenfalls noch eine Münzeinwurfstation vorgesehen werden.
- Freisprecheinrichtung ③ (Lautsprecher + Mikrofon), die den Telefonhörer ersetzt. Diese kann hinter der Glasscheibe, die mit Schallöffnungen versehen ist, angebracht werden. Es kann auch mit schallleitenden Folien gearbeitet werden. Die Freisprecheinrichtung kann auch hinter einer heruntergehängten Kabinendecke in vandalensicherer Ausführung untergebracht werden. Auch mehrere Mikrofone und Lautsprecher (Raumton) können geschützt angebracht werden. Die Telefonkabine kann mit schalldämmenden Materialien zusätzlich ausgekleidet werden. Ueber diese Freisprecheinrichtung ③ können auch der Freiton, der Besetztton und weitere zusätzliche Informationen verbreitet werden, z.B. Sprachausgabe der gewählten Telefonnummmer.

Für behinderte Benützer, kann die gewünschte Telefonummer über eine Spracherkennungsvorrichtung (über Vorrichtung ③ oder einem eigenem Mikrofon) eingegeben werden. Das elektronische Telefonbuch wird auch über diese Spracherkennungseinrichtung gesteuert. Die gefundene Telefonnummer wird dann über ein akkustisches Kommando vom System selbständig gewählt bzw. ausgegeben.

Eine Fernbedienung über einen Sender und Sensor ⑥ (wie bei einem Fernsehapparat) kann vorgesehen werden. Mit den Tasten dieser Fernbedienungssender können nicht nur Telefonnummern eingegeben, sondern es können auch komplette Nummern und andere Informationen, die in dieser Fernbedienung gespeichert sind, gesendet werden. Das elektronische Telefonbuch wird auch über diese Fernbedienung gesteuert mit Unterstützung einer akkustischen Signalausgabe oder über Anweisungen der Sprachausgabevorrichtung ③ oder einem eigenem Lautsprecher.
Hör- bzw. sprechbehinderte Personen können mit Hilfe von Tastern (Schreiben) oder dieser Fernbedienung ⑥ und dem Bildschirm ② von Telefonkabinen aus mit gleichen oder ähnlichen Systemen kommunizieren.
Mit diesem Fernbedienungssender können Behinderte nicht nur Telefonieren (bedienen des Telefonsystems) sondern, mit diesem Sender können Sie auch die Steuerung von Fussgängerampeln, das Oeffnen und Schliessen von automatischen Türen, die Steuerung von Aufzügen (das Heranholen der Kabine bei den Schachtzugängen, Abgabe von Kommandos in der Kabine wie Etagenwahl, Tür-auf- bzw. Tür-zu-Kommando, usw.) übernehmen. Mit dieser Fernbedienung sollen alle für die Fernbedienung geeigneten Vorrichtungen gesteuert werden können.
Dieser Sendertyp ist zu standardisieren, so dass weltweit mit ein und demselben Gerät, Fernbedienungen (nicht nur TV, Radioanlagen usw.) wie vorher beschrieben, vorgenommen werden können.

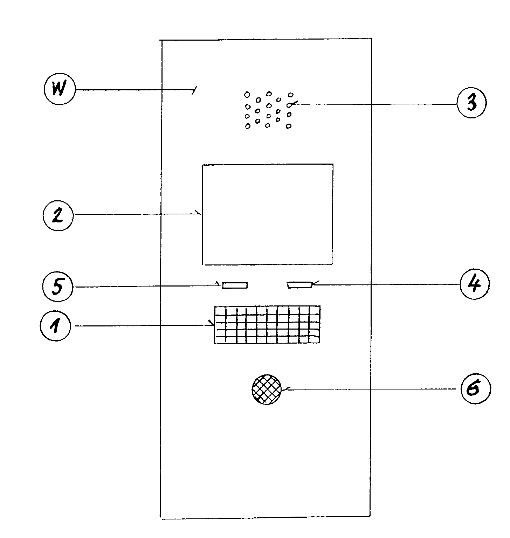

Die einzige Zeichnungsfigur zeigt ein Spiel einer erfindungsgemässen Telefonkabine mit einer Wand Ⓦ aus bruchsicherem Glas. Dahinter sind vor Beschädigung geschütz untergebracht:
① Tastatur (z.B.: Sensoren) zur Eingabe der Telefonnummer, erweitert durch eine Tastatur (z.B.: Schreibmaschinentastatur) für die Benützung des elektronischen Telefonbuches.
② Monitor (z.B.: LCD-Anzeige) für die Anzeige der gewählten Telefonnummer und Zusatzinformationen. Dieser Monitor kann auch als Anzeige für das elektronische Telefonbuch und Bildtelefonie verwendet werden.
③ Freisprecheinrichtung (Mikrofon und Lautsprecher), sofern sie nicht anderwertig ausgeführt und angeordnet wird. Diese Einrichtung wird auch für die Sprachsteuerung und Ausgabe von Informationen und akkustischen Signalen verwendet.
④ Einzugschlitz für Zahlkarten
⑤ Einzugschlitz für Informationsträger zur Steuerung des Telefonapparates, z.B.: Magnetkarten mit gespeicherten Telefonnummern, etc.
⑥ Sensoren für die Fernsteuerung der Telefonanlage.

## Patentansprüche

1. Telefonkabine mit mindestens einer Wand aus bruchsicherem Glas, hinter welcher die technischen Einrichtungen vandalensicher geschützt angeordnet sind.

2. Telefonkabine nach Anspruch 1, dadurch gekennzeichnet, dass die Wand aus bruchsicherem Glas mit Metall kombiniert ist.

3. Telefonkabine nach Anspruch 1 oder 2, dadurch gekennzeichnet, dass die Wand gerade, geneigt, gebogen oder unterteilt angeordnet ist.

4. Telefonkabine nach einem der Ansprüche 1 bis 3, dadurch gekennzeichnet, dass auf der Wand ein aus Sensoren, touch screens oder touch panels bestehendes Tastenfeld angeordnet ist, das zur Bedienung der technischen Einrichtungen dient.

5. Telefonkabine nach Anspruch 4, dadurch gekennzeichnet, dass hinter der Wand zur Anzeige von Telefonnummern, elektronischem Telefonbuch, Uhrzeit, Münzvorrat, Bildtelefonie, Zusatzinformation und Werbung mindestens ein Bildschirm angeordnet ist.

6. Telefonkabine nach Anspruch 5, dadurch gekennzeichnet, dass hinter der Wand für Bildtelefonie und gleichzeitige Ueberwachung der Kabine eine Videokamera angeordnet ist.

7. Telefonkabine nach Anspruch 6, dadurch gekennzeichnet, dass hinter der Wand eine Vorrichtung zum Bezahlen der Gebühren angeordnet ist.

8. Telefonkabine nach Anspruch 7, dadurch gekennzeichnet, dass hinter der Wand zum Telefonieren und für die Eingabe und Ausgabe akkustischer Signale eine Freisprechanlage angeordnet ist.

9. Telefonkabine nach Anspruch 8, dadurch gekennzeichnet, dass hinter der Wand Sensoren zur Fernsteuerung der technischen Einrichtungen angeordnet sind, welche Sensoren mittels tragbarer Sender der Benützer betätigbar sind.
